# EUROPÄISCHE PATENTANMELDUNG

(11) **EP 1 419 941 A2**
(43) Veröffentlichungstag der Anmeldung: **19.05.2004**
(21) Anmeldenummer: 03024996.5
(22) Anmeldetag: 30.10.2003
(51) Int. Cl.: B60R 21/20, B60R 21/26

(54) **Baugruppe bestehend aus Fahrzeugkarosserieteil und einem Gassackmodul**

(30) Priorität: 15.11.2002 DE 10253403
(71) Anmelder: TRW Occupant Restraint Systems GmbH & Co. KG, 73553 Alfdorf (DE)
(72) Erfinder: Debler, Jens, 73527 Schwäbisch Gmünd (DE); Schultz, Dirk, 73540 Heubach (DE); Lutz, Joachim, 73579 Schechingen (DE)
(74) Vertreter: Sties, Jochen, Dipl.-Ing.

(57) **Zusammenfassung**

Eine Baugruppe besteht aus einem Gassackmodul (16) und einem Fahrzeugkarosserieteil (10) mit einem Lüftungskanal (34) zum Belüften einer Frontscheibe. Der Lüftungskanal ist zwischen der Frontscheibe (12) und dem Gassackmodul angeordnet, wobei das Gassackmodul (16) einen zu einem Gassackpaket gefalteten Gassack (52) und eine Gaslanze (54) aufweist, durch die Gas in den Gassack geleitet werden kann. Das Gassackmodul weisteine Ausstoßöffnung (50) auf, durch die der Gassack beim Aufblasen ausgestoßen werden kann, und das Gassackpaket umfaßt zwei Teilpakete, von denen das erste Teilpaket (52a) näher zur Ausstoßöffnung angeordnet ist, während das zweite Teilpaket (52b) ferner zur Ausstoßöffnung angeordnet ist. Die Gaslanze (54) ist so im Gassackmodul angeordnet, daß sich nur das erste Teilpaket (52a) zwischen der Ausstoßöffnung (50) und der Gaslanze befindet.

## Beschreibung

Die Erfindung betrifft eine Baugruppe bestehend aus einem Gassackmodul und einem Fahrzeugkarosserieteil mit einem Lüftungskanal zum Belüften einer Frontscheibe, wobei der Lüftungskanal zwischen der Frontscheibe und dem Gassackmodul angeordnet ist, wobei das Gassackmodul einen zu einem Gassackpaket gefalteten Gassack und eine Gaslanze aufweist, durch die Gas in den Gassack geleitet werden kann, wobei das Gassackmodul eine Ausstoßöffnung aufweist, durch die der Gassack beim Aufblasen ausgestoßen werden kann.

Gassäcke sollen einen Fahrzeuginsassen vor einem unsanften Kontakt mit der Fahrzeugstruktur bewahren, indem sie seine kinetische Energie aufnehmen und im wesentlichen den Kopf effektiv abbremsen. Diese Forderung ist insbesondere dann nicht leicht zu erfüllen, wenn sich der Fahrzeuginsasse nicht in einer optimalen Sitzposition befindet, d.h. wenn er den Oberkörper vornüber oder zur Seite beugt. In solchen Fällen muß sich der Gassack möglichst weit vom Insassen entfernt auf einer breiten Front entfalten, um den Insassen in verschieden Positionen abfangen zu können. Dies wird im Stand der Technik durch ein langgestrecktes Gassackmodul erreicht, das sich parallel zur Vorderkante der Instrumententafel erstreckt, wie es beispielsweise in der DE 23 38 025 beschrieben ist.

Aufgabe der Erfindung ist es, eine Baugruppe der eingangs genannten Art zu schaffen, bei welcher das Gassackmodul möglichst weit vom Fahrzeuginsassen entfernt angeordnet ist und die eine sanfte und schonende Entfaltung des Gassackes auf breiter Front gestattet.

Zu diesem Zweck ist bei einer Baugruppe der eingangs genannten Art vorgesehen, daß das Gassackpaket zwei Teilpakete umfaßt, von denen das erste Teilpaket näher zur Ausstoßöffnung angeordnet ist, während das zweite Teilpaket ferner zur Ausstoßöffnung angeordnet ist und die Gaslanze so im Gassackmodul angeordnet ist, daß sich nur das erste Teilpaket zwischen der Ausstoßöffnung und der Gaslanze befindet. Beim Aufblasen des gefalteteten Gassackes durch die Gaslanze wird zunächst nur das erste Teilpaket ausgestoßen. Die gefalteteten Lagen des restlichen Teilpaketes werden im weiteren Verlauf des Aufblasvorganges nachgezogen. Da nicht die gesamte Masse des Gassackes in einem Paket in Bewegung ist, ist auch die Belastung insbesondere für die Frontscheibe verringert und damit ein schonenderer Ausstoß des Gassackes gewährleistet. Auch eine gleichmäßigere Entfaltung des Gassackes kann auf diese Weise erreicht werden.

Gemäß einer vorteilhaften Ausführungsform der Erfindung ist das erste Teilpaket auf eine erste Art gefaltet und das zweite Teilpaket auf eine zweite Art gefaltet. Die Faltungsarten der Teilpakete können beispielsweise so angepaßt sein, daß das erste Teilpaket einfacher außerhalb des Schußkanals entfaltet werden kann, während das zweite Teilpaket einfacher im Gehäuse entfaltet werden kann, sodaß die Lagen nacheinander aus dem Gehäuse gezogen werden können. Damit kann eine besonders gleichmäßige und schonende Entfaltung des Gassackes erreicht werden.

Weitere vorteilhafte Ausgestaltungen der Erfindung ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in denen zeigt:
- Figur 1 einen Querschnitt durch eine Baugruppe gemäß einer ersten Ausführungsform der Erfindung;
- Figur 2 eine vergrößerte Darstellung des Bereichs II aus Figur 1;
- Figur 3 einen Querschnitt durch eine Baugruppe gemäß einer zweiten Ausführungsform der Erfindung;
- Figur 4 eine perspektivische Ansicht des Gassackmoduls der Baugruppe aus Figur 3;
- Figur 5 eine Ansicht einer ersten Bauform einer Gaslanze eines Gassackmoduls für eine erfindungsgemäße Baugruppe;
- Figur 6 einen Querschnitt durch eine Baugruppe gemäß einer dritten Ausführungsform der Erfindung;
- Figur 7 einen Querschnitt durch eine Baugruppe gemäß einer vierten Ausführungsform der Erfindung;
- Figur 8 eine perspektivische Ansicht des Gassackmoduls der Baugruppe aus Figur 7;
- Figur 9 einen Querschnitt durch eine Baugruppe gemäß einer fünften Ausführungsform der Erfindung;
- Figur 10 eine perspektivische Ansicht des Gassackmoduls der Baugruppe aus Figur 9;
- Figur 11 einen Querschnitt durch eine Baugruppe gemäß einer sechsten Ausführungsform der Erfindung;
- Figur 12 eine schematische Ansicht der Baugruppe aus Figur 1;
- Figur 13 einen Querschnitt durch eine zweite Bauform einer Gaslanze eines Gassackmoduls für eine erfindungsgemäße Baugruppe;
- Figur 14 einen Querschnitt durch eine dritte Bauform einer Gaslanze eines Gassackmoduls für eine erfindungsgemäße Baugruppe;
- Figur 15 einen Querschnitt durch eine vierte Bauform einer Gaslanze eines Gassackmoduls für eine erfindungsgemäße Baugruppe;
- Figur 16 einen Querschnitt durch ein Gassackmodul einer Baugruppe gemäß einer siebten Ausführungsform der Erfindung;
- Figur 17 einen Querschnitt durch ein Gassackmodul einer Baugruppe gemäß einer achten Ausführungsform der Erfindung;
- Figur 18 einen Querschnitt durch eine Baugruppe gemäß einer neunten Ausführungsform der Erfindung;
- Figur 19 einen Querschnitt durch eine Baugruppe gemäß einer zehnten Ausführungsform der Erfindung;
- Figur 20 eine Bauform eines Gassackmoduls für eine Baugruppe gemäß der Erfindung mit angeschlossenem Gasgenerator; und
- Figur 21 eine Ansicht des Gasgenerators und der Anschlußschelle des Gassackmoduls aus Figur 21.

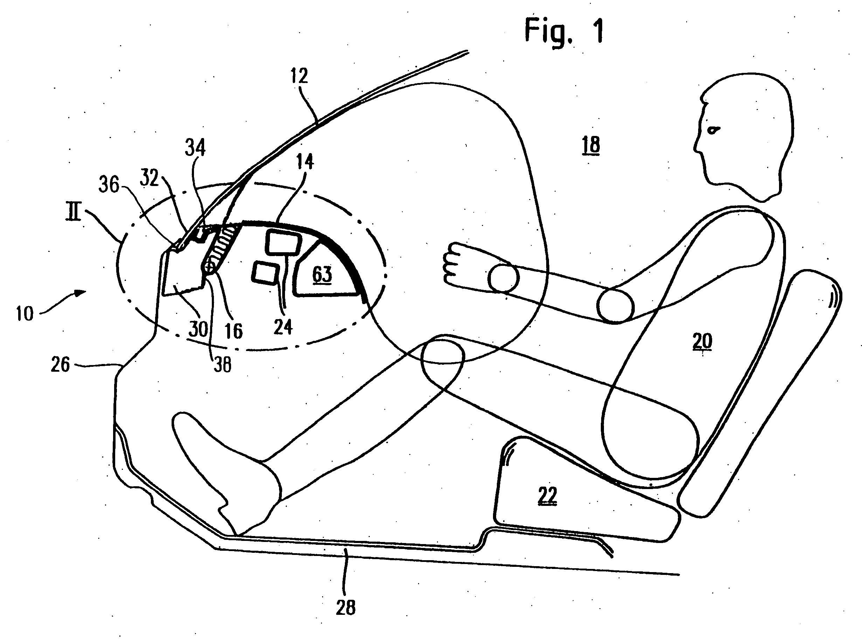

In Figur 1 ist im Querschnitt schematisch eine Baugruppe zu sehen, die aus einem Teil einer Fahrzeugkarosserie 10 mit einer Frontscheibe 12 und einer Instrumententafel 14 und aus einem Gassackmodul 16 besteht. Die Fahrzeugkarosserie umschließt einen Fahrzeuginnenraum 18, in dem sich ein Fahrzeuginsasse 20, der in Figur 1 schematisch angedeutet ist, beispielsweise auf einem Sitz 22 sitzend aufhalten kann. Das Fahrzeugkarosserieteil 10 weist Rahmenträger 24, eine Spritzschutzwand 26 und einen Fahrzeugboden 28 auf. Das Fahrzeugkarosserieteil 10 umfaßt auch einen Scheibenhalter 30, in welchem die Frontscheibe 12 mit ihrer Unterkante 32 gelagert ist. Von dem Scheibenhalter 30 ausgehend erstreckt sich die Instrumententafel 14 in den Fahrzeuginnenraum 18, wodurch sie den Scheibenhalter 30 und den Rahmenträger 24 vor den Blicken des Fahrzeuginsassen 20 kaschiert.

Der Scheibenhalter 30 kann beispielsweise wie in den Figuren dargestellt als Hohlprofil aus Kunststoff oder Metall ausgeführt sein. Auf seiner dem Fahrzeuginnenraum 18 abgewandten Seite ist eine Einbuchtung 36 zur Aufnahme der Unterkante 32 der Frontscheibe 12 ausgebildet. Im Scheibenhalter 30 ist außerdem Platz für einen Lüftungskanal 34, mit dessen Hilfe warme Luft zur Frontscheibe 12 geleitet werden kann, um diese zu enteisen oder ein Beschlagen derselben zu verhindern. An der zum Fahrzeuginnenraum 18 weisenden Innenseite 38 des Scheibenhalters 30 ist das Gassackmodul 16 angebracht, von welchem in den weiteren Figuren verschiedene Bauformen detaillierter dargestellt sind.

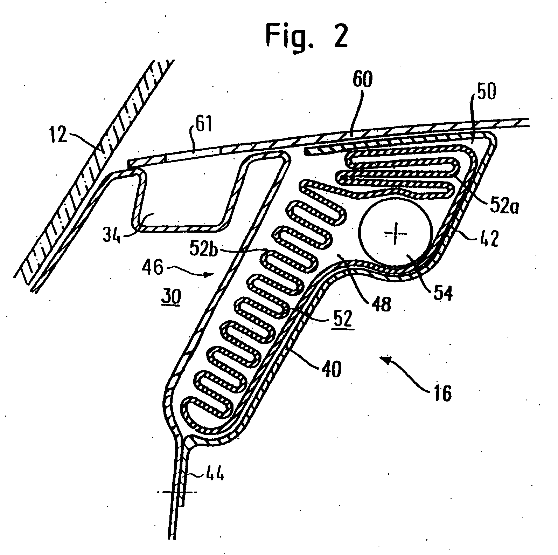

Das in Figur 2 dargestellte Gassackmodul besitzt ein Gehäuse 40, das einen schmalen, im wesentlichen rechteckigen Querschnitt aufweist. An dem im eingebauten Zustand unteren Ende des Gehäuses befindet sich ein Befestigungsabschnitt 44. Mit diesem Befestigungsabschnitt 44 ist das Gehäuse 40 am Scheibenhalter 30 befestigt. Das Gehäuse bildet einen Schußkanal 48, der von einer ersten Schußkanalwand 42 und einer zweiten Schußkanalwand 46 begrenzt ist. Der Schußkanal 48 mündet in eine Ausstoßöffnung 50, und sein Querschnitt ist am oberen Ende erweitert. Durch die Ausstoßöffnung 50 kann ein im Gehäuse untergebrachter Gassack 52 ausgestoßen werden. Eine Gaslanze 54 dient der Einleitung von Druckgas in das Innere des Gassackes 52 um diesen aufzublasen. Der Gassack ist in zwei Teilpakete gefaltet, nämlich ein erstes Teilpaket 52a, das sich zwischen der Ausstoßöffnung und der Gaslanze befindet, und eine zweites Teilpaket 52b, das im unteren Teil des Gehäuses 40 untergebracht ist.

Die Länge des Gassackmoduls ist als diejenige Abmessung definiert, die sich entlang der Erstreckung der Gaslanze bemißt, also in der Zeichnung senkrecht zu dem dargestellten Querschnitt. Die Breite des Moduls ist als Abmessung quer zu der Länge, im wesentlichen parallel zu einer durch die Ausstoßöffnung gebildeten Ebene definiert. Die Höhe des Moduls schließlich ist als Abmessung definiert, die sich im wesentlichen senkrecht zur Ebene der Ausstoßöffnung bemißt.

Vorteilhafterweise umfaßt das erste Teilpaket 52a des Gassackes 52 nur wenige Lagen und ist damit kleiner als das zweite Teilpaket 52b. Durch diese Anordnung wird erreicht, daß bei der Auslösung des Gassackmoduls 16 zunächst die wenigen Lagen des oberen Teilpakets 52a in Richtung der Frontscheibe 12 ausgestoßen und danach die restlichen Lagen des unteren Teilpaketes 52b durch den sich entfaltenden Gassack 52 nachgezogen werden, wobei sich der Gassack 52 in vorteilhafter Weise entlang der Frontscheibe 12 entfalten kann. Da nicht der gesamte Gassack in einem Paket ausgestoßen wird, ist die Belastung der Frontscheibe verringert und eine gleichmäßige und schonende Entfaltung des Gassackes gewährleistet.

Die beiden Teilpakete 52a und 52b können in unterschiedlicher Weise gefaltet sein, beispielsweise so, daß sich das erste Teilpaket 52a außerhalb des Gehäuses in besonders günstiger Weise entfalten kann, während die Faltungsart des zweiten Teilpaketes das lagenweise Nachziehen des restlichen Gassackes erleichtert.

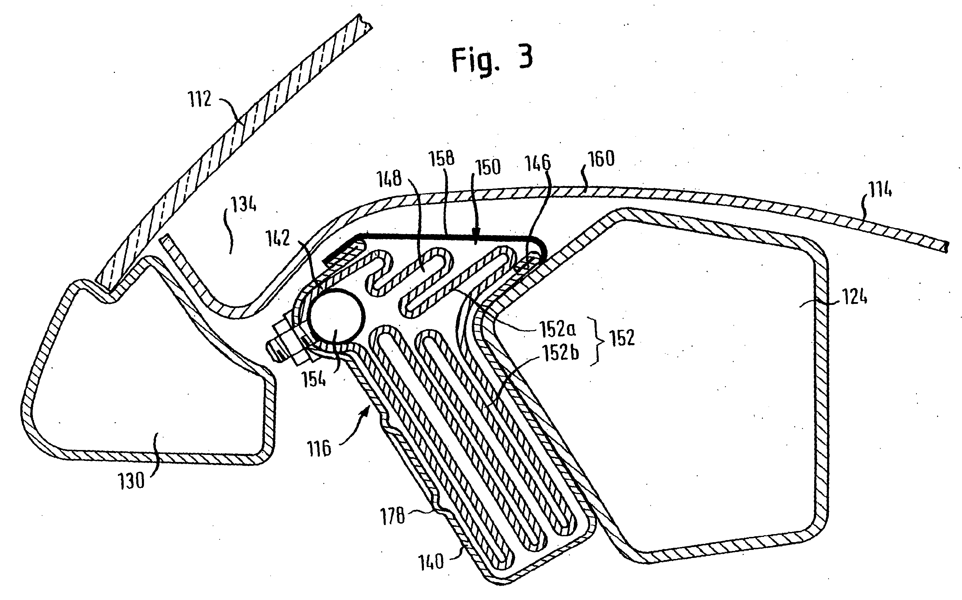

Die Instrumententafel 14 bildet im Bereich des Gassackmoduls 16 eine Abdeckung 60 für die Ausstoßöffnung 50. In der Abdeckung 60 kann in bekannter Weise eine Sollbruchstelle oder Reißlinie vorgesehen sein, die im Auslösefall das Aufreißen der Abdeckung 60 und das Austreten des Gassacks 52 aus dem Schußkanal 48 gestattet. Alternativ kann die Abdeckung 60 auch in das Gehäuse 40 des Gassackmoduls oder in den Lüftungskanal 34 integriert sein. In der Abdeckung 60, soweit sie den Lüftungskanal 34 mit abdeckt, können auch Lüftungsöffnungen 61 ausgebildet sein, durch welche die Luft aus dem Lüftungskanal 34 entweichen kann. Zwischen dem Gassackmodul 16 und der Frontscheibe 12 befindet sich der Lüftungskanal 34, der in den Scheibenhalter 30 integriert ist. Der Lüftungskanal kann alternativ auch in die Abdeckung 60 integriert (Fig. 3) oder als separates Teil ausgebildet sein.

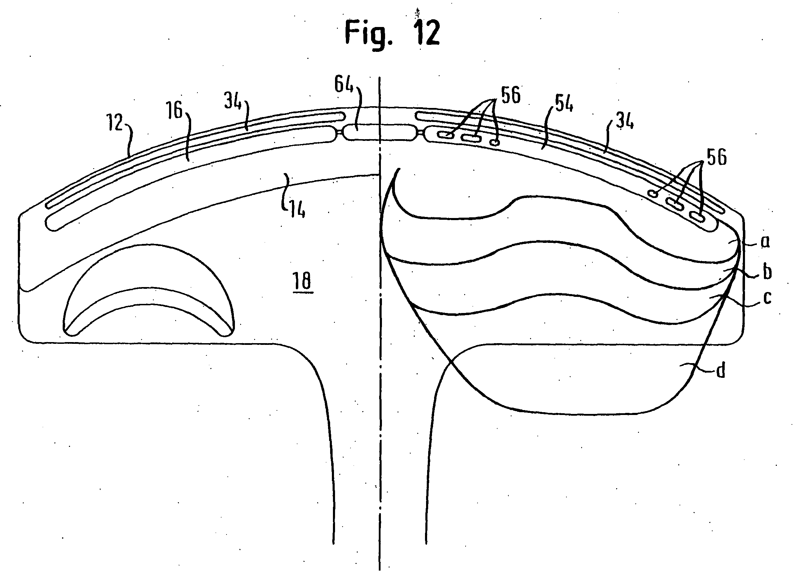

Wie in Figur 12 deutlich zu sehen ist, kann das Gassackmodul 16, bedingt durch seine langgestreckte und schmale Konstruktion, nahe genug an der Frontscheibe 12 angeordnet sein, sodaß die beweglichen Teile des Öffnungsmechanismus des Gassackmoduls 16, also die aufreißende Abdeckung 60, weit entfernt vom Interaktionsbereich des Fahrzeuginsassen 20 liegen, selbst wenn sich dieser vornüber beugt, um beispielsweise in ein Handschuhfach 63 zu greifen. Die langgestreckte Konstruktion gewährleistet bereits in der Anfangsphase eine Entfaltung des Gassackes auf breiter Front.

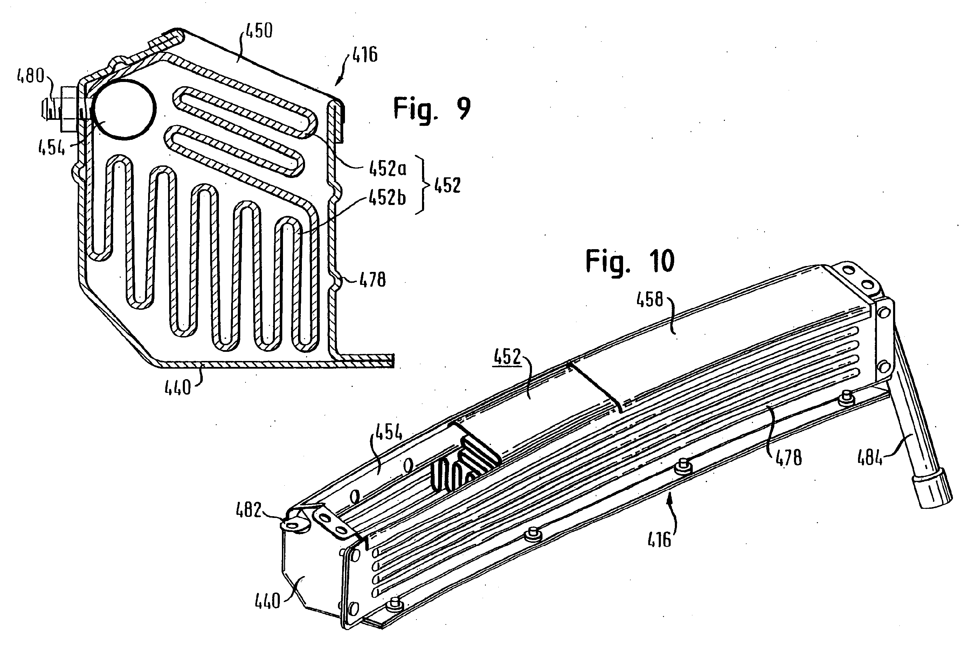

Vorteilhafterweise ist das Gassackmodul 16 entsprechend der Form des Fahrzeugkarosserieteils 10 gekrümmt, wie beispielsweise in den Figuren 10, 11, 12 und 16 zu sehen ist. Die Krümmung kann insbesondere dem Verlauf der Unterkante 32 der Frontscheibe 12 angepaßt werden, damit das Gassackmodul 16 möglichst dicht am Lüftungskanal 34 bzw. am Scheibenhalter 30 verlaufen kann, wobei diese die zweite Schußkanalwand 46 für das Gassackmodul 16 bilden können. Außerdem kann das Gassackmodul 16 durch die Krümmung vorteilhaft an das Design der Instrumententafel 14 angepaßt sein.

In Figur 3 ist eine zweite Ausführungsform der Erfindung gezeigt, bei der für bereits bekannte Bauteile um 100 erhöhte Bezugszeichen verwendet werden.

In dieser Ausführungsform ist das Gassackmodul 116 an einem Rahmenträger 124 des Fahrzeuges befestigt. Das Gassackmodul 116 weist einen abgekröpften Schußkanal 148 auf; der Schußkanal 148 erstreckt sich in einer anderen Richtung als der übrige Teil des Gehäuses 140, in dem das größere Gassack-Teilpaket 152b angeordnet ist. Der abgekröpften Schußkanal 148 sorgt dafür, daß der Gassack im wesentlichen parallel zur Frontscheibe 112 ausgestoßen wird, um deren Belastung zu verringern und eine schnellere Entfaltung des Gassackes in Richtung des Fahrzeuginsassen zu gewährleisten. Dennoch kann das Gassackmodul 116 nahe zur Frontscheibe 112, bzw. zum Scheibenhalter 130 eingebaut sein, da sich durch die abgekröpfte Form des Schußkanals 148 der überwiegende Teil des Gassackmoduls 116 zwischen dem Scheibenhalter 130 und dem Rahmenträger 124 unterbringen läßt.

Zur einfacheren Montage und zum Schutz des Gassacks 152 kann das gefaltete Gassackpaket 152a mit einer Schutzlage 158 abgedeckt sein, die sich beispielsweise in Form einer Folie oder einer Gewebelage zwischen den Rändern der Ausstoßöffnung 150 erstreckt und mit einer Perforation versehen sein kann, um das Aufreißen der Schutzlage 158 zu erleichtern.

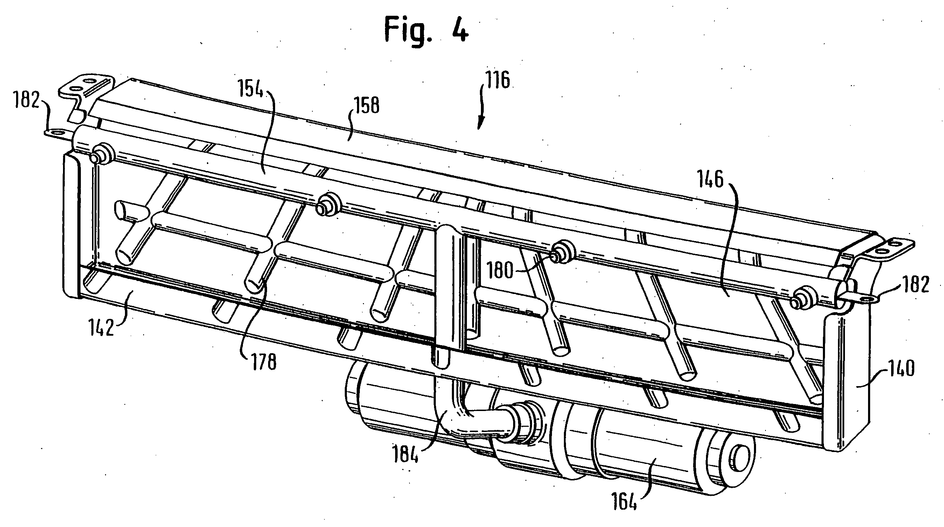

In Figur 4 ist dieses Gassackmodul 116 in einer perspektivischen Ansicht dargestellt. Das Gehäuse 140 ist in dieser Ausführungsform aus Wandteilen, z.B. aus Kunststoff oder Blech, zusammengefügt, wobei die großflächigen Teile, welche die beiden Schußkanalwände 142, 146 bilden, zur Versteifung mit Sicken 178 versehen sind. Die erste, hintere Schußkanalwand 142 ist in der Darstellung in Figur 4 aufgeschnitten, damit die Gaslanze 154 gut zu sehen ist. Die Gaslanze 154 erstreckt sich über die gesamte Länge des Moduls 116 und ist mit Befestigungszapfen 180 versehen, mit denen sie im Gehäuse 140 z.B. an der hinteren Schußkanalwand 142 befestigt sein kann. An den Enden der Gaslanze 154, die aus dem Gehäuse 140 ragen, können Befestigungslaschen 182 zur zusätzlichen Befestigung im Fahrzeug ausgebildet sein. Von der Mitte der Gaslanze 154 führt ein Verbindungsrohr 184 zu einem Gasgenerator 164, der außerhalb des Moduls 116 im Fahrzeug untergebracht ist. Das Verbindungsrohr 184 ist mittels eines lösbaren Anschlußes 186, der weiter unten beschreiben ist, an dem Gasgenerator 164 angeschlossen, so daß der Gasgenerator 164 leicht auch nach Einbau des Gassackmoduls 116 montiert und gegebenenfalls ausgetauscht werden kann. Das Verbindungsrohr 184 ermöglicht auch in vorteilhafter Weise die Unterbringung des Gasgenerators 164 unabhängig vom Modul 116 an geeigneter Stelle im Fahrzeug.

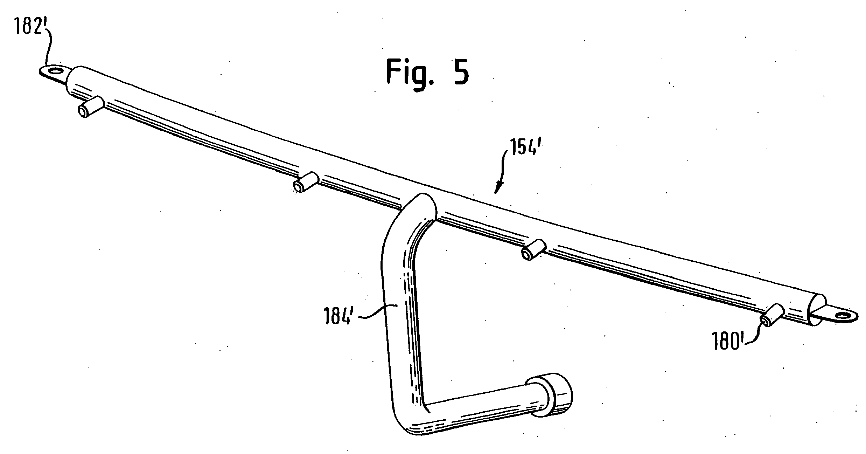

Eine Variante für die Gestaltung einer Gaslanze 154' mit Verbindungsrohr 184' ist in Figur 5 zu sehen. Hier ragt das Verbindungsrohr 184' parallel zu den Befestigungsbolzen 180' aus der Gaslanze 154' heraus und ist in unmittelbarer Nähe seiner Verbindung zur Gaslanze 154' um etwa 90° gekrümmt. Dadurch kann es weitgehend außerhalb des Gehäuses 140' geführt sein, wodurch im Gehäuse 140' mehr Platz zur Unterbringung eines Gassackes bleibt, bzw. das Gehäuse kleiner sein kann.

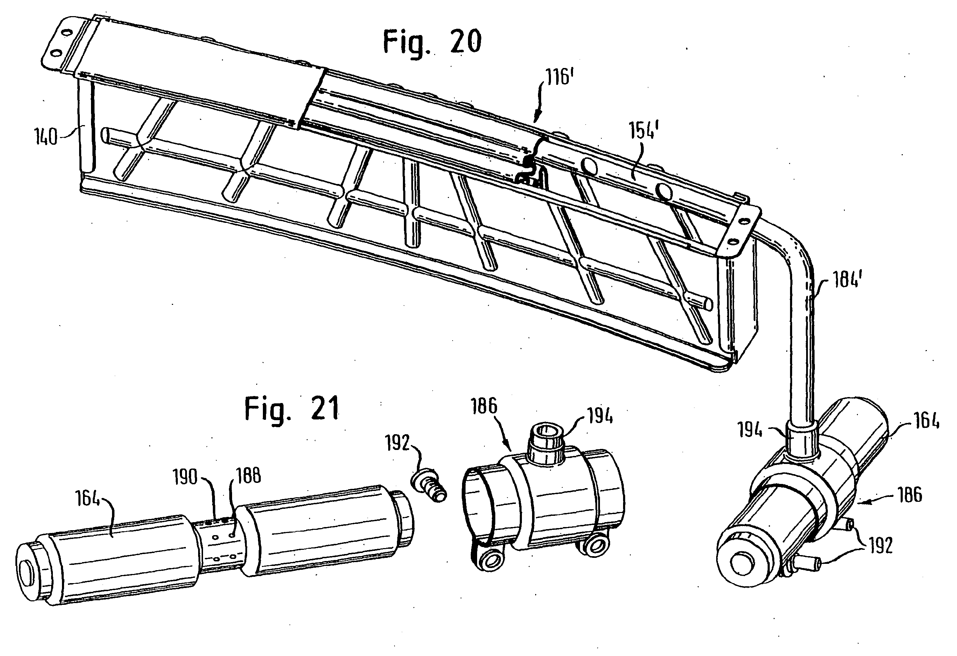

Die T-förmige Anordnung des Verbindungsrohres 184 in der Mitte der Gaslanze 154 ergibt einen symmetrischen Strömungsweg beim Einströmen des Gases. Damit wird vorteilhaft verhindert, daß das einströmende Gas auf die Gaslanze 154 eine Schubkraft in Längsrichtung ausübt. Das Verbindungsrohr 184 kann alternativ auch an einem Ende der Gaslanze 154" angebracht sein, oder als Verlängerung derselben aus dem Gehäuse 140" herausgeführt sein, wie es in Figur 20 gezeigt ist.

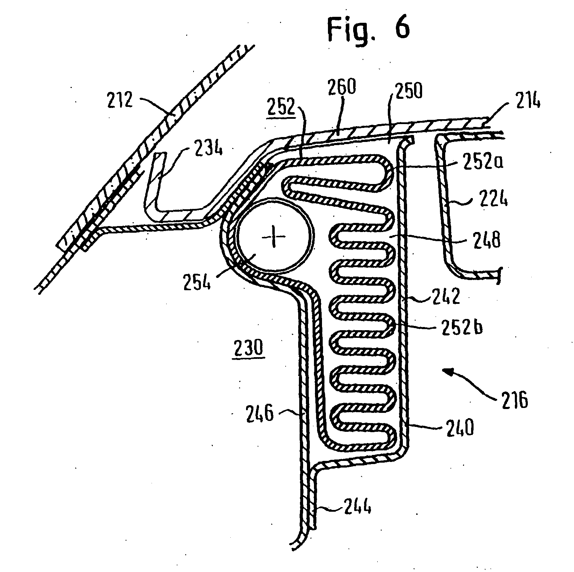

In einer dritten Ausführungsform der Erfindung, die in Figur 6 mit Bezugszeichen ab 200 gezeigt ist, ist das Gassackmodul 216 wiederum am Scheibenhalter 230 befestigt. Das Gehäuse 240 und insbesondere der Schußkanal 248 steht bei dieser Ausführungsform im Gegensatz zu den vorher beschriebenen Ausführungsformen im wesentlichen in der Vertikalen und folgt damit den geometrischen Gegebenheiten der Fahrzeugstruktur, die durch den Scheibenhalter 230 vorgegeben sind. Die Gaslanze 254 ist hier auf der zur Frontscheibe 212 weisenden Seite des Gassackmoduls 216 angeordnet. Dadurch wird der Gassack 252 beim Aufblasen nicht in Richtung der Querachse des Schußkanals 248 ausgestoßen, sondern erhält einen ablenkenden Impuls, sodaß er sich im wesentlichen parallel zur Frontscheibe 212 ausbreiten kann.

Der Schußkanal 248 ist begrenzt von einer ersten Schußkanalwand 242, die von dem Gehäuse 240 des Gassackmoduls 216 gebildet ist, und von einer zweiten Schußkanalwand 246, die von dem Rahmenträger 224 gebildet ist. Damit kann eine Wand am Gehäuse 240 eingespart werden, wodurch sich eine Gewichts und Kostenersparnis für das Gassackmodul 216 ergibt.

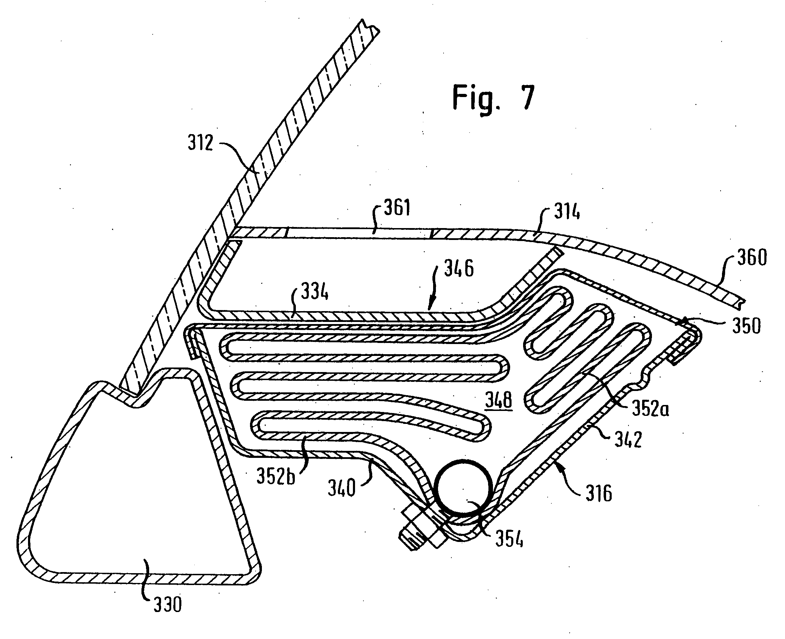

Eine vierte Ausführungsform, die in Figur 7 dargestellt und mit Bezugszeichen ab 300 versehen ist, besitzt ein Gassackmodul 316 mit einem gekröpften Schußkanal 348, das unter dem Lüftungskanal 334 angeordnet ist. Der Lüftungskanal 334 ersetzt die zweite Schußkanalwand 346.

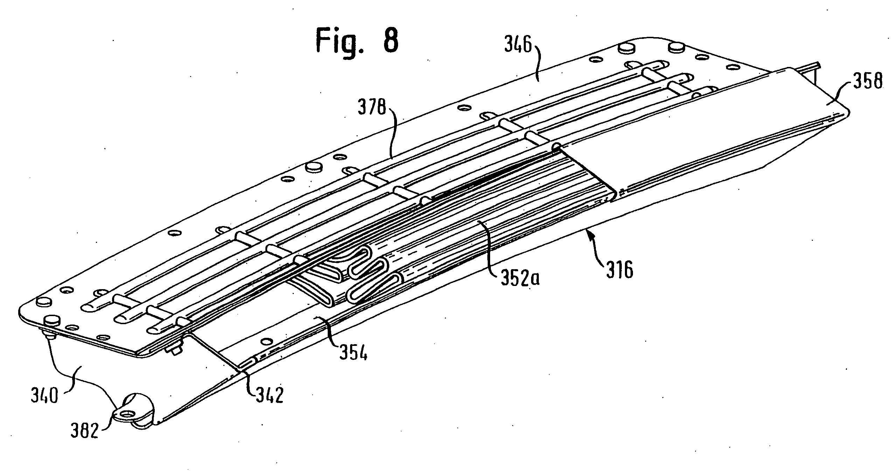

In Figur 8 ist in einer perspektivischen Ansicht eine Variante eines Gassackmodules 316' zu sehen, die ein vollständiges Gehäuse 340' mit eigener zweiter Schußkanalwand 346' besitzt.

Die Figuren 9 und 10 zeigen ein Gassackmodul 416 mit einem sehr kompakten fünfeckigen Querschnitt, der bei gegebenem Gassackvolumen mit einem geringen Materialaufwand für das Gehäuse 440 auskommt und daher auch eine hohe Gewichts- und Kostenersparnis bietet.

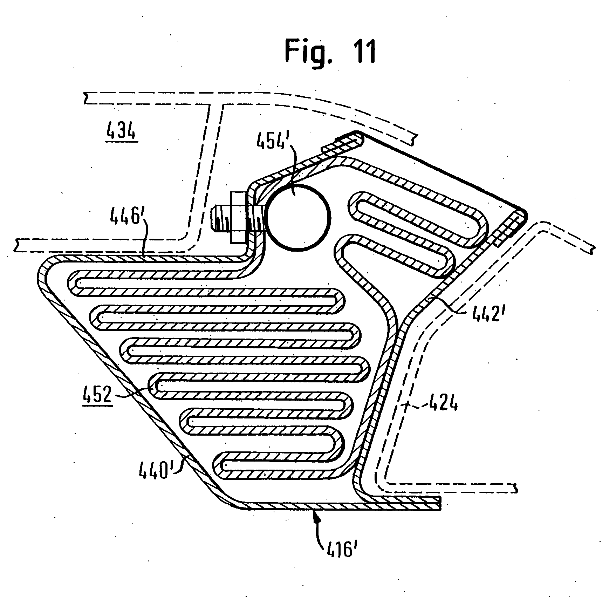

In Figur 11 ist eine weitere Variante eines Gehäusequerschnittes zu sehen, bei dem die Schußkanalwände 442', 446' an die Konturen beispielsweise von Rahmenträger 424 und Lüftungskanal 434 angepaßt sein können.

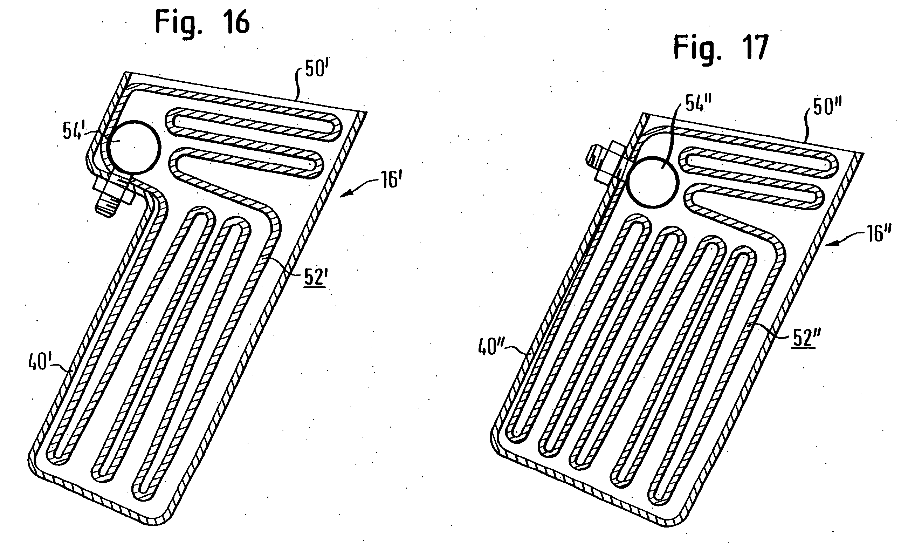

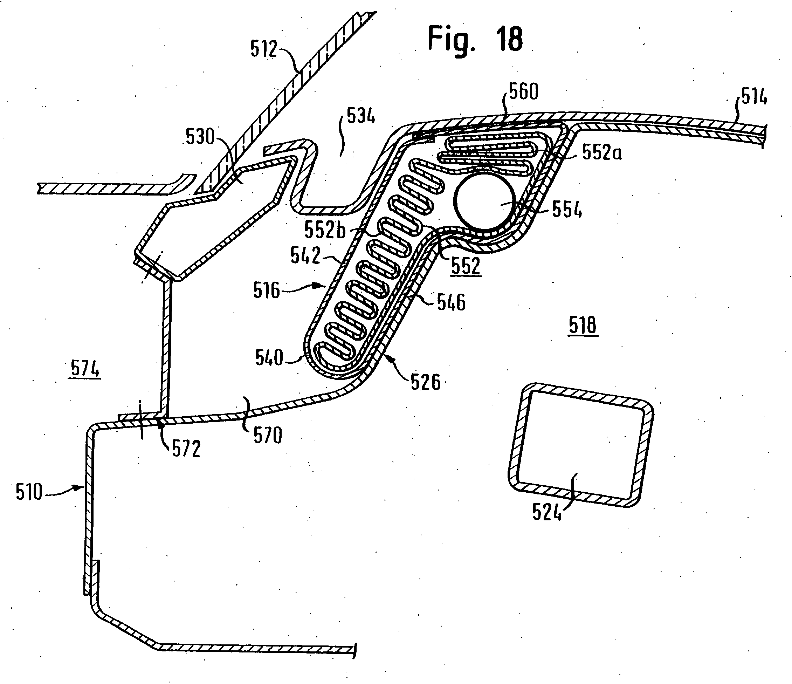

In den Figuren 16 und 17 sind Varianten von Gassackmodulen mit verschiedenen einfachen Querschnittsformen gezeigt.

Die Gassackmodule aller beschriebenen Ausführungsform der Erfindung können selbstverständlich sowohl für Fahrer- als auch für die Beifahrerseite ausgeführt sein. Die Gaslanzen von Fahrer und Beifahrermodul können dabei mit einem gemeinsamen Gasgenerator verbunden sein, wie es beispielsweise in Figur 12 gezeigt ist, oder es können für Fahrer und Beifahrerseite jeweils getrennte Gasgeneratoren vorgesehen sein.

Die gezielte Ausbreitung des Gassackes 52 kann weiterhin durch Form und Anordnung der Ausströmöffnungen 56 in der Gaslanze 54, wie in den Figuren 12 bis 15 dargestellt, beeinflußt werden. Zum einen kann durch die Anordnung der Ausströmöffnungen 56 an den Enden der Gaslanze 54 bzw. dadurch, daß die Querschnitte der Ausströmöffnungen 56 in diesen Bereichen größer ausgeführt sind als in der Mitte, erreicht werden, daß sich der Gassack 52 in den Seitenbereichen schneller ausbreitet. Dies ist in Figur 12 durch die verschiedenen Ausbreitungsphasen a bis d des Gassackes 52 angedeutet. Eine derartige Ausbreitung des Gassackes 52 ist besonders dann vorteilhaft, wenn sich der Fahrzeuginsasse 20 nicht in einer optimalen Sitzposition befindet.

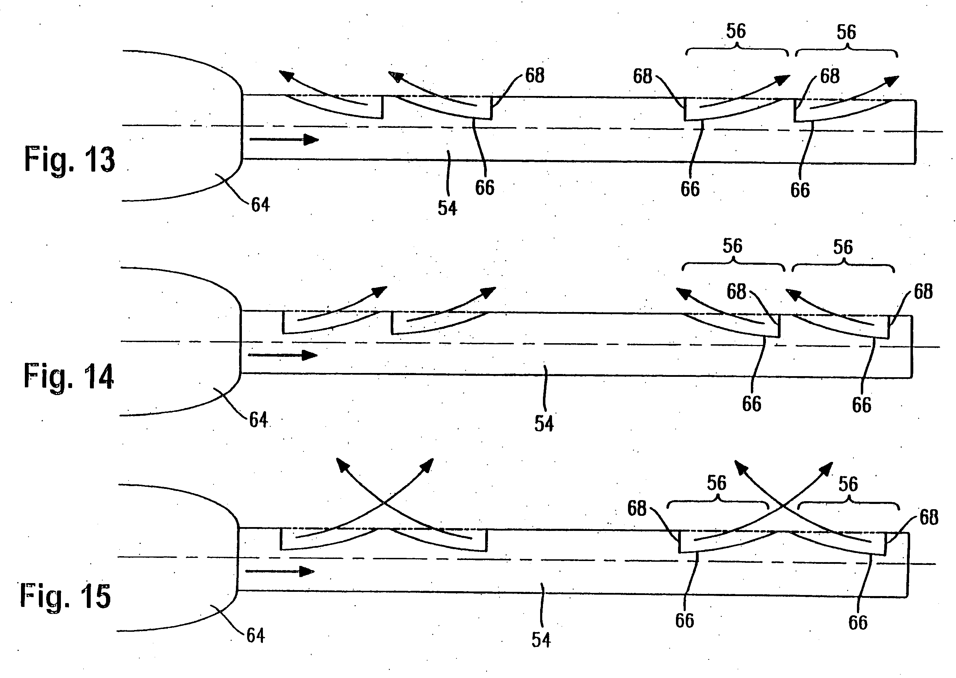

Zum anderen können die Ausströmöffnungen 56 in der Gaslanze 54 in vorteilhafter Weise in Form kiemenartiger Einbuchtungen 66 ausgebildet sein. In den Figuren 13 bis 15 sind derartige Ausströmöffnungen 56 dargestellt. Sie bestehen aus in die Gaslanze eingedrückten Einbuchtungen 66, von denen ein in Längsrichtung liegendes Ende eingestanzt ist und somit eine Öffnung 68 zum Rohrinnern bildet. Durch die kiemenartigen Einbuchtungen 66 wird die Ausströmrichtung des Gases aus der Gaslanze 54 im wesentlichen vorgegeben, wie es in den Figuren 13 bis 15 durch die Pfeile angedeutet ist. Damit kann das ausströmende Gas zu den Enden (Figur 13) oder zur Mitte (Figur 14) der Gaslanze 54 gelenkt oder an den Ausströmöffnungen 56 verwirbelt werden (Figur 15).

Eine weitere Ausführungsform einer erfindungsgemäßen Baugruppe zeigt Figur 18, in der für bereits bekannte Bauteile um 500 erhöhte Bezugszeichen Verwendung finden. In dieser Ausführungsform reicht die Spritzschutzwand 526 in den Fahrzeuginnenraum 518 bis zur Instrumententafel 514. Zwischen Scheibenhalter 530 und Spritzschutzwand 526 befindet sich ein Zwischenraum 570, der das Gassackmodul 516 aufnimmt. Das Gassackmodul 516 ist nicht wie in den vorangegangenen Ausführungsformen am Scheibenhalter 530 oder an einem Rahmenteil 524, sondern an der Spritzschutzwand 526 befestigt, und zwar auf der dem Fahrzeuginnenraum 518 abgewandten Seite, während sich der Lüftungskanal 534 zwischen dem Scheibenhalter 30 und dem Gassackmodul 516 befindet. Dabei kann die Spritzschutzwand 526 auch die zweite Schußkanalwand 546 für das Gassackmodul 516 bilden. Der Zwischenraum 570 ist durch eine Feuchtigkeitsschutzwand 572, die an der Spritzschutzwand 526 und am Scheibenhalter 530 befestigt ist, gegen den Motorraum 574 hin abgeschlossen.

Diese Ausführungsform bietet den Vorteil, daß das Gassackmodul 516 vom Motorraum 574 her montiert werden kann. Diese Montagemöglichkeit ist besonders im Hinblick auf die üblicherweise sehr sperrigen kombinierten Fahrerund Beifahrer-Module vorteilhaft.

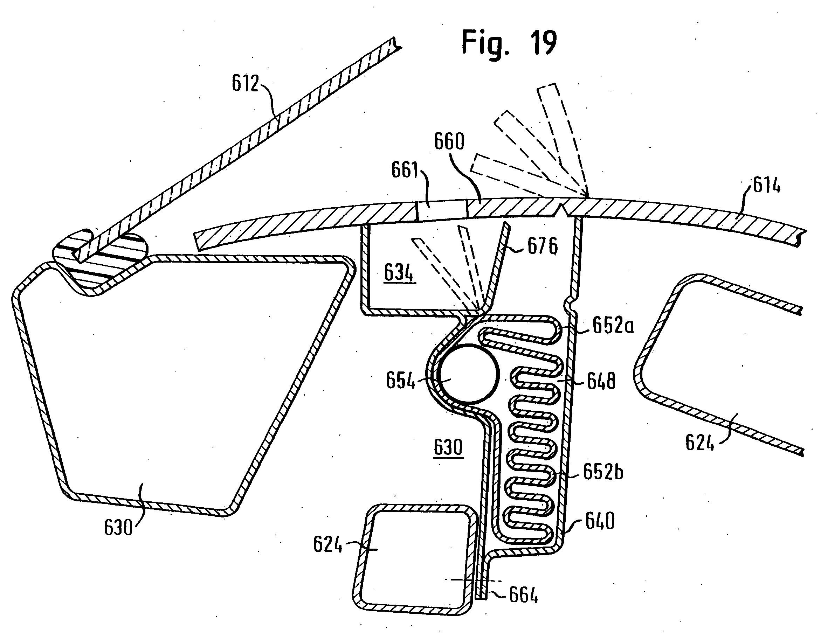

In Figur 19 ist eine Baugruppe gemäß einer siebten Ausführungsform gezeigt. Bei dieser Ausführungsform ist das Gehäuse 640 einstückig mit dem Lüftungskanal 634 ausgeführt, und zwar hängend unterhalb von diesem in der Nähe des Scheibenhalters 630. Das Gehäuse 640 ist mit dem Befestigungsabschnitt 644 an dem Rahmenträger 624 angebracht. Der Schußkanal 648 ist hier unterhalb der Abdeckung 660 ausgebildet, wobei zur Abgrenzung des Lüftungskanals 634 eine Trennklappe 676 vorgesehen ist. Diese ist so elastisch, daß sie beim Entfalten des Gassacks 652 geringfügig nachgibt, so daß sich der Schußkanal 648 erweitert. Auf diese Weise kann zum Austritt des Gassacks 652 auch die Lüftungsöffnung 661 des Lüftungskanals 634 mitbenutzt werden.

In den Figuren 20 und 21 ist eine Bauform eines Gassackmoduls dargestellt, in welcher ein Gasgenerator 164 lösbar durch eine Anschlußschelle 186 mit der Gaslanze 154' verbunden ist. Dabei umgreift die Anschlußschelle 186 den rohrförmigen Gasgenerator 164 im Bereich seiner Ausströmöffnungen 188, die an einer Einschnürung 190 angeordnet sind. Die Anschlußschelle 186 ist mit einem Anschlußstutzen 194 versehen, an den das Verbindungsrohr 184' angeschlossen ist. Die Anschlußschelle 186 kann nach Art einer Rohrschelle mit Schrauben 192 am Umfang des Gasgenerators 164 festgeklemmt werden. Auf diese Wiese ist eine einfache Montage des Gasgenerators 164 und gegebenenfalls ein schneller Austausch möglich.

Alle beschriebenen Ausführungsformen führen zu einer von Anfang an großflächige Ausbreitungsfront des Gassackes. Dies bewirkt in Verbindung mit der maximalen Entfernung zum Fahrzeuginsassen, daß die Energie des Gassackes bei der Entfaltung besonders im Zentralbereich des Gassackes verringert ist und somit die Belastung eines Fahrzeuginsassen, der sich nicht in einer optimalen Sitzposition befindet, reduziert ist.

Als vorteilhaft für die Abmessungen der Gassackmodule der erfindungsgemäßen Baugruppen hat sich bei einem Gassackvolumen von 110 bis 140 Litern eine Länge von wenigstens 260 bis über 480 mm bei einer Breite von 50 bis 90 mm und einer Höhe von 70 bis 110 mm erwiesen.

## Patentansprüche

1. Baugruppe bestehend aus einem Gassackmodul (16; 16'; 116; 216; 316; 416; 516; 616) und einem Fahrzeugkarosserieteil (10; 510) mit einem Lüftungskanal (34; 134; 234; 334; 434; 534; 634) zum Belüften einer Frontscheibe, wobei der Lüftungskanal zwischen der Frontscheibe (12; 112; 212; 312; 412; 512; 612) und dem Gassackmodul angeordnet ist, wobei das Gassackmodul (16; 16'; 116; 216; 316; 416; 516; 616) einen zu einem Gassackpaket gefalteten Gassack (52; 52'; 52"; 152; 252; 352; 452; 552; 652) und eine Gaslanze (54; 54'; 54"; 154; 154"; 254; 354; 454; 554; 454"; 654) aufweist, durch die Gas in den Gassack geleitet werden kann, wobei das Gassackmodul eine Ausstoßöffnung (50; 50'; 50"; 150; 250; 350; 450) aufweist, durch die der Gassack beim Aufblasen ausgestoßen werden kann, **dadurch gekennzeichnet, daß** das Gassackpaket zwei Teilpakete umfaßt, von denen das erste Teilpaket (52a; 152a; 252a; 352a; 452a; 552a; 652a) näher zur Ausstoßöffnung angeordnet ist, während das zweite Teilpaket (52b; 152b; 252b; 352b; 452b; 552b; 652b) ferner zur Ausstoßöffnung angeordnet ist, und die Gaslanze (54; 54'; 54"; 154; 154"; 254; 354; 454; 554; 454"; 654) so im Gassackmodul angeordnet ist, daß sich nur das erste Teilpaket (52a; 152a; 252a; 352a; 452a; 552a; 652a) zwischen der Ausstoßöffnung (50; 50'; 50"; 150; 250; 350; 450) und der Gaslanze befindet.

2. Baugruppe nach Anspruch 1, **dadurch gekennzeichnet, daß** das erste Teilpaket (52a; 152a; 252a; 352a; 452a; 552a; 652a) kleiner ist als das zweite Teilpaket (52b; 152b; 252b; 352b; 452b; 552b; 652b).

3. Baugruppe nach einem der Ansprüche 1 oder 2 , **dadurch gekennzeichnet, daß** das erste Teilpaket (52a; 152a; 252a; 352a; 452a; 552a; 652a) auf eine erste Art gefaltet ist und das zweite Teilpaket (52b; 152b; 252b; 352b; 452b; 552b; 652b) auf eine zweite Art gefaltet ist.

4. Baugruppe nach einem der Ansprüche 1 bis 3, **dadurch gekennzeichnet, daß** die Gaslanze (54; 54'; 54"; 154; 254; 454; 554; 654) in der Nähe der Ausstoßöffnung (50; 50'; 50"; 150; 250; 350; 450) angeordnet ist.

5. Baugruppe nach einem der vorhergehenden Ansprüche, **dadurch gekennzeichnet, daß** das Gassackmodul (216; 316) ein Gehäuse (240; 340) mit einem Schußkanal (248; 348) aufweist, der in die Ausstoßöffnung (250; 350) mündet, wobei der Schußkanal (248; 348) begrenzt ist von einer ersten Schußkanalwand (242; 342), die von dem Gehäuse gebildet ist, und von einer zweiten Schußkanalwand (246; 346), die von dem Fahrzeugkarosserieteil (230; 334) gebildet ist.

6. Baugruppe nach Anspruch 5, **dadurch gekennzeichnet, daß** die zweite Schußkanalwand von der Spritzschutzwand gebildet ist.

7. Baugruppe nach Anspruch 5, **dadurch gekennzeichnet, daß** das Fahrzeugkarosserieteil einen Rahmenträger aufweist, wobei die zweite Schußkanalwand von dem Rahmenträger gebildet ist.

8. Baugruppe nach Anspruch 5, **dadurch gekennzeichnet, daß** die zweite Schußkanalwand (346) von dem Lüftungskanal (334) gebildet ist.

9. Baugruppe nach einem der vorhergehenden Ansprüche, **dadurch gekennzeichnet, daß** der Schußkanal (148; 348) gegenüber dem Rest des Gehäuses (140; 340) gekröpft ist, sodaß der Gassack (150; 350) beim Ausstoßen eine Richtungsänderung erfährt.

10. Baugruppe nach Anspruch 9, **dadurch gekennzeichnet, daß** der Schußkanal (148; 348) so gekröpft ist, daß der Gassack (150; 350) beim Ausstoßen im wesentlichen parallel zur Frontscheibe (112; 312) ausgestoßen wird.

11. Baugruppe nach einem der vorhergehenden Ansprüche, **dadurch gekennzeichnet, daß** die Gaslanze (54) mit kiemenartigen Ausströmöffnungen (56) versehen ist.

12. Baugruppe nach Anspruch 11, **dadurch gekennzeichnet, daß** die kiemenartigen Ausströmöffnungen (56) so ausgerichtet sind, daß das aus der Gaslanze (54) ausströmende Gas zu den Enden der Gaslanze (54) hin strömt.

13. Baugruppe nach Anspruch 11, **dadurch gekennzeichnet, daß** die kiemenartigen Ausströmöffnungen (56) so ausgerichtet sind, daß das aus der Gaslanze (54) ausströmende Gas zur Mitte der Gaslanze (54) hin strömt.

14. Baugruppe nach Anspruch 11, **dadurch gekennzeichnet, daß** die kiemenartigen Ausströmöffnungen (56) so ausgerichtet sind, daß das aus der Gaslanze (54) ausströmende Gas verwirbelt wird.

15. Baugruppe nach einem der Ansprüche 1 bis 14, **dadurch gekennzeichnet, daß** das Gassackmodul für Fahrer- und Beifahrerseite getrennte Gasgeneratoren aufweist.

16. Baugruppe nach einem der Ansprüche 1 bis 14, **dadurch gekennzeichnet, daß** das Gassackmodul für Fahrer- und Beifahrerseite einen gemeinsamen Gasgenerator aufweist.

17. Baugruppe nach einem der vorhergehenden Ansprüche, **dadurch gekennzeichnet, daß** zwischen der Gaslanze (154; 154'; 454) und dem Gasgenerator (164; 464) ein Verbindungsrohr (184; 184', 484) angeordnet ist.

18. Baugruppe nach Anspruch 17, **dadurch gekennzeichnet, daß** das Verbindungsrohr (184) in der Mitte der Gaslanze (154') angeschlossen ist.

19. Baugruppe nach einem der vorhergehenden Ansprüche, **dadurch gekennzeichnet, daß** der Gasgenerator (164) mittels eines lösbaren Anschlusses (186) mit der Gaslanze (154; 154') verbunden ist.

20. Baugruppe nach Anspruch 19, **dadurch gekennzeichnet, daß** der lösbare Anschluß von einer Anschlußschelle (186) gebildet ist, die den Gasgenerator (164) im Bereich seiner Ausströmöffnungen (188) umgreift.

21. Baugruppe nach einem der vorhergehenden Ansprüche, **dadurch gekennzeichnet, daß** das Gehäuse (640) am Lüftungskanal (634) angeordnet ist.

22. Baugruppe nach Anspruch 18, **dadurch gekennzeichnet, daß** das Gehäuse (640) einstückig mit dem Lüftungskanal (634) ausgebildet ist.

23. Baugruppe nach einem der vorhergehenden Ansprüche, **dadurch gekennzeichnet, daß** eine Länge des Gassackmoduls definiert ist, welche sich entlang der Erstreckung der Gaslanze bemißt, wobei die Länge wenigstens 260 mm beträgt.

24. Baugruppe nach einem der vorhergehenden Ansprüche, **dadurch gekennzeichnet, daß** eine Länge des Gassackmoduls definiert ist, welche sich entlang der Erstreckung der Gaslanze bemißt, wobei die Länge wenigstens 480 mm beträgt.

25. Baugruppe nach einem der vorhergehenden Ansprüche, **dadurch gekennzeichnet, daß** eine Breite des Gassackmoduls definiert ist, welche sich quer zu der Länge, im wesentlichen parallel zu einer durch die Ausstoßöffnung gebildeten Ebene bemißt, wobei die Breite etwa 50 bis 90 mm beträgt.

26. Baugruppe nach einem der vorhergehenden Ansprüche, **dadurch gekennzeichnet, daß** eine Höhe des Gassackmoduls definiert ist, welche sich quer zur Länge und zur Breite des Gassackmoduls bemißt und etwa 70 bis 110 mm beträgt.

27. Baugruppe nach einem der vorhergehenden Ansprüche, **dadurch gekennzeichnet, daß** der Gassack ein Volumen von 110-140 Liter aufweist.
